# EUROPEAN PATENT APPLICATION

(11) **EP 1 698 966 A2**
(43) Date of publication of application: **06.09.2006**
(21) Application number: 06110519.3
(22) Date of filing: 28.02.2006
(51) Int. Cl.: G06F 3/048

(54) **User Interface Method for Activating Clickable Object and Playback Apparatus for Performing the Method**

(30) Priority: 04.03.2005 KR 2005018334
(71) Applicant: Samsung Electronics Co., Ltd., Suwon-si, Gyeonggi-Do (KR)
(72) Inventor: Limonov, Alexander, Yeongtong-gu Gyeonggi-do Suwon-si (KR)
(74) Representative: Waddington, Richard

(57) **Abstract**

A user interface method for activating a clickable object (110) and a playback apparatus for performing the user interface method are provided. The user interface method comprises highlighting a clickable object (110) included in a moving image (100) played on a screen, and activating the highlighted clickable object (110). At least one of the operation of highlighting the clickable object (110) and the operation of activating the highlighted clickable object (110) is performed when a particular button (102) specially provided in a user input device (2) is pressed. A highlight is sequentially moved between clickable objects by pressing the particular button (102) once or twice or by using a menu mode or a normal button to select one clickable object (110), and the selected clickable object (110) is activated.

## Description

The present invention relates to an apparatus for reproducing moving images, and more particularly, to a user interface method for activating a clickable object included in a moving image on a screen, and a playback apparatus for performing the user interface method.

With the rapid growth of multimedia technology, a variety of multimedia customer electronics (CEs) for playing moving images have been developed. In particular, with the commencement of digital multimedia broadcasting (DMB) services using various broadcasting media including terrestrial broadcasting, satellite broadcasting, and cable broadcasting, compact multimedia devices with diverse functions have been developed.

DMB services include diverse media data such as video, audio, text, hyperlinks, and still images. In particular, a hyperlink is used to provide diverse additional information related with a moving image. The hyperlink is manifested as an object in a particular region on a screen on which the moving image is displayed. When a user watching the moving image clicks on the object in the particular region, predefined additional content may be played or a particular action related with the moving image may be executed. Hereinafter, among objects such as characters and properties included in a moving image, an object such as a selectable button that is assigned a particular action is referred to as a "clickable object."

Meanwhile, in a conventional user interface method used to activate a hyperlink in a conventional computer environment, a cursor is moved to a relevant object using a pointing device, such as a mouse or a joystick, and an access button is clicked. Alternatively, focusing of an object is converted when a "Tab" key or an "Enter" button is pressed.

However, most of recently developed compact multimedia devices do not provide a pointing device, such as a mouse or a joystick. Even if the pointing device is provided, it is very difficult and inconvenient for a user to point at a small object, using such a pointing device, in a moving image that is continuously changing on a screen. Moreover, a display screen on those compact multimedia devices has become increasingly smaller and smaller.

When the conversion of the focusing of an object is used, not only a hyperlink that provides an additional function related with a moving image but also all kinds of interactive objects, such as a button and a text box, are focused on. As a result, a significant amount of time is required for a user to find a desired clickable object, and the user may feel annoyed and inconvenient by such a requirement.

Various aspects and example embodiments of the present invention provide a user interface method for activating a clickable object quickly and conveniently, and a playback apparatus for performing a user interface method for activating a clickable object quickly and conveniently.

Additional aspects and/or advantages of the invention will be set forth in part in the description which follows and, in part, will be obvious from the description, or may be learned by practice of the invention.

According to the present invention there is provided an apparatus and method as set forth in the appended claims. Preferred features of the invention will be apparent from the dependent claims, and the description which follows.

In accordance with an aspect of the present invention, there is provided a user interface method comprising highlighting a clickable object included in a moving image played on a screen, and activating the highlighted clickable object, wherein at least one of the operation of highlighting the clickable object and the operation of activating the highlighted clickable object is performed when a particular button specially provided in a user input device is pressed.

The highlighting of the clickable object and the activating of the highlighted clickable object may be performed at one time when the particular button is pressed once.

The highlighting of the clickable object may be performed when the particular button is pressed a first time, and the activating of the highlighted clickable object may be performed when the particular button is pressed a second time.

The highlighting of the clickable object may be performed when the particular button is pressed, and the activating of the highlighted clickable object may include selecting at least one clickable object in a menu mode and activating the selected clickable object.

The highlighting of the clickable object may be performed when the particular button is pressed, and the activating of the highlighted clickable object may include sequentially moving a highlight between clickable objects using a normal button included in the user input device to select one clickable object and activating the selected clickable object.

The highlighting of the clickable object may include highlighting the clickable object when the clickable object is found in the moving image played on the screen, regardless of whether the particular button is pressed, and the activating of the highlighted clickable object may be performed when the particular button is pressed.

The highlighting of the clickable object may be performed only when the particular button is pressed and when the clickable object is found, and the activating of the highlighted clickable object may be performed when the particular button is pressed again.

The highlighting of the clickable object may include displaying a list of clickable objects in a pop-up menu when the at least one clickable object included in the moving image played on the screen is found, regardless of whether the particular button is pressed; and the activating of the highlighted clickable object may include moving a highlight across the pop-up menu according to an input of a move button usually provided in the user input device to select a clickable object desired by a user from the list of clickable objects and activating the selected clickable object when a select button usually provided in the user input device is pressed. When the particular button is pressed, the move button may be first used to move the highlight between the clickable objects on the list, and when a function of the particular button is cancelled, the move button may be returned to its original function as a normal move button.

The highlighting of the clickable object may include highlighting a first clickable object when at least one clickable object is found in the moving image on the screen, regardless of whether the particular button is pressed, and the activating of the highlighted clickable object may include sequentially moving a highlight between clickable objects found in the moving image using a normal button provided in the user input device to select one clickable object and activating the selected clickable object, when a select button usually provided in the user input device is pressed. The normal button provided in the user input device may include one of a move button and a tab button.

In accordance with another aspect of the present invention, there is provided a playback apparatus for moving images, comprising a unit for highlighting a clickable object included in a moving image played on a screen, and a unit for activating the highlighted clickable object, wherein at least one of the unit for highlighting and the unit for activating is adapted to operate when a particular button specially provided in a user input device is pressed.

In accordance with yet another aspect of the present invention, a playback apparatus for reproducing moving images comprises a playback unit arranged to playback a moving image on a screen; a user interface receiver arranged to receive a user input, via a user input device; and a control unit configured to highlight a clickable object included in the moving image played on the screen, and to activate the highlighted clickable object, when a particular button specially provided in the user input device is pressed.

The control unit is further configured to highlight the clickable object and activate the highlighted clickable object at one time when the particular button is pressed once. Alternatively, the control unit may be adapted to highlight the clickable object when the particular button is pressed a first time, and to activate the highlighted clickable object when the particular button is pressed a second time.

The control unit is preferably further configured to highlight the clickable object when the particular button is pressed, and to select at least one clickable object in a menu mode and then to activate the selected clickable object. Alternatively, the control unit may be adapted to highlight the clickable object when the particular button is pressed, and to sequentially move a highlight between clickable objects and then activate the highlighted clickable object using normal buttons included in the user input device.

The control unit is preferably further configured to highlight the clickable object when the clickable object is found in the moving image played on the screen, regardless of whether the particular button is pressed. Alternatively, the control unit may be operable to highlight the clickable object only when the particular button is pressed and when the clickable object is found.

The control unit is preferably further configured to provide a visual display of a list of clickable objects in a pop-up menu, when the at least one clickable object included in the moving image played on the screen is found, regardless of whether the particular button is pressed. Such a control unit can also preferably move a highlight across the pop-up menu according to an input of a move button usually provided in the user input device to select a clickable object desired by a user from the list of clickable objects and activate the selected clickable object when a select button usually provided in the user input device is pressed. Alternatively, the control unit can preferably also sequentially move a highlight between clickable objects found in the moving image using a normal button provided in the user input device to select one clickable object, and activate the selected clickable object when a select button usually provided in the user input device is pressed.

In addition to the example embodiments and aspects as described above, further aspects and embodiments will be apparent by reference to the drawings and by study of the following descriptions.

A better understanding of the present invention will become apparent from the following detailed description of example embodiments and the claims when read in connection with the accompanying drawings, all forming a part of the disclosure of this invention. While the following written and illustrated disclosure focuses on disclosing example embodiments of the invention, it should be clearly understood that the same is by way of illustration and example only and that the invention is not limited thereto. The following represents brief descriptions of the drawings, wherein:
FIG. 1 illustrates an example of a screen on which a moving image including a clickable object is played or displayed according to an embodiment of the present invention;
FIG. 2 illustrates a user input unit used to activate a clickable object in a moving image according to an embodiment of the present invention;
FIG. 3 is a block diagram of an example playback apparatus with a unit for activating a clickable object in a moving image according to an embodiment of the present invention;
FIG. 4 is a flowchart of a method of activating a clickable object in a moving image using a single button input according to an embodiment of the present invention;
FIG. 5 is a flowchart of a method of activating a clickable object in a moving image using a two-button input according to an embodiment of the present invention;
FIG. 6 is a flowchart of a method of activating a clickable object in a moving image using a menu mode according to an embodiment of the present invention; and
FIG. 7 is a flowchart of a method of activating a clickable object one at a time by sequentially moving a highlight from one clickable object to another using a normal button, according to an embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

Hereinafter, the present invention will be described in detail by explaining preferred embodiments of the invention with reference to the attached drawings, wherein like reference numerals refer to like elements throughout.

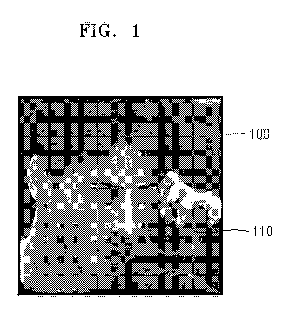

FIG. 1 illustrates an example of a screen on which a moving image including a clickable object is played or displayed according to an embodiment of the present invention. Referring to FIG. 1, the moving image 100 may include a clickable object 110. When a user watching the moving image 100 activates an object in a particular region, i.e., the clickable object 110, predefined additional content may be played or a particular action related with the moving image 100 may be executed. In the present invention, it is assumed that a clickable object 110 is discriminated from interactive objects, such as a normal button or a text box. The present invention provides a method of activating a clickable object 110 included in a moving image 100 quickly and conveniently.

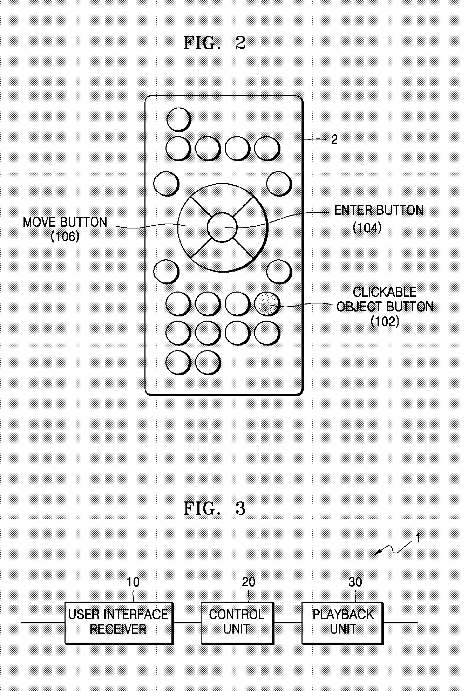

FIG. 2 illustrates a user input unit 2 used to activate a clickable object in a moving image according to an embodiment of the present invention. Referring to FIG. 2, the user input unit 2 can be implemented as a remote controller. However, the present invention is not limited to the remote controller; rather, various types of user input units such as a keypad for a mobile phone providing moving images and a front panel for a playback apparatus such as a digital versatile disc (DVD) player may also be used.

According to an embodiment of the present invention, the user input unit 2 includes a clickable object button 102 for activating a clickable object 110 included in a moving image 100, as shown, for example, in FIG. 1, which is separated from conventional normal buttons. The user input unit 2 also includes a move button 106 for movement in four directions, i.e., up, down, left, and right, or an "Enter" or "Select" button 104 for selecting an object, which are provided for a usual remote controller or a mobile phone keypad. It will be apparent that the names of the buttons 102, 104, and 106 may be changed according to embodiments. The clickable object button 102 specially provided in the user input unit 2 according to the present invention provides a function that conveniently activates the clickable object 110 included in the moving image 100 currently played on a screen.

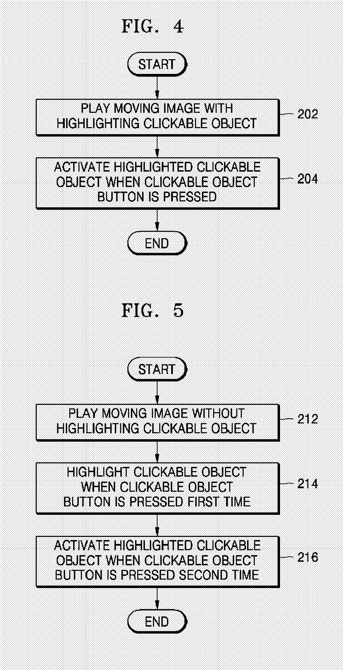

FIG. 3 is a block diagram of an example playback apparatus 1 with a unit for activating a clickable object according to an embodiment of the present invention. The playback apparatus 1 receives a predetermined input from a user through the user input unit 2 and provides a function that activates a clickable object included in a moving image. As shown in FIG. 3, the playback apparatus 1 includes a user interface receiver 10, a control unit 20, and a playback unit 30.

The user interface receiver 10 receives a user input through the user input unit 2 shown in FIG. 2. The control unit 20 activates a clickable object 110 included in a moving image 100 according to the user input so that the clickable object 110 is played or executed by the playback unit 30. The playback unit 30 plays moving image data. In addition, when a clickable object 110 is activated, the playback unit 30 plays predefined additional content corresponding to the activated clickable object 110, or executes a predefined additional function corresponding to the activated clickable object 110.

The control unit 20 may include a means (not shown) for highlighting a clickable object 110 and a means (not shown) for activating the highlighted clickable object 110 according to various scenarios described later. The playback apparatus 1 according to the present invention highlights a clickable object 110 included in a moving image 100 played on a screen, and activates the highlighted clickable object 110 when the clickable object button 102 included in the user input unit 2 is pressed.

Hereinafter, methods of activating a clickable object using the playback apparatus 1 and the user input unit 2 according to various embodiments of the present invention will be described. FIGS. 4 through 7 illustrate user interface methods for activating a clickable object using the clickable object button 102 according to four scenarios, respectively.

FIG. 4 is a flowchart of a method of activating a clickable object included in a moving image using a single button input according to an embodiment of the present invention. Referring to FIG. 4, when the playback apparatus 1 finds a clickable object 110 included in a moving image 100, as shown, for example, in FIG. 1, played on a screen, such a playback apparatus 1 automatically highlights the clickable object 110 regardless of whether a particular button is pressed in operation 202. Here, an assumption is made that only single clickable object 110 is included in the moving image 100 on the screen. Thereafter, if a user presses the clickable object button 102 provided in the user input unit 2, the highlighted clickable object 110 is activated in operation 204.

Accordingly, the clickable object 110 can be conveniently activated by clicking the clickable object button 102 one time.

FIG. 5 is a flowchart of a method of activating a clickable object included in a moving image using a two-button input according to an embodiment of the present invention. Referring to FIG. 5, the playback apparatus 1 plays a moving image 100, as shown in FIG. 1, without highlighting a clickable object 110 even if it finds the clickable object 110 included in the played moving image 100 in operation 212. When the clickable object button 102 is pressed by a user for a first time, the playback apparatus 1 highlights the clickable object 110 in operation 214. Here, an assumption is made that only single clickable object 110 is included in the moving image 100 on a screen. If a user presses the clickable object button 102 provided in the user input unit 2 for a second time, the highlighted clickable object 110 is activated in operation 216. Accordingly, the clickable object 110 can be conveniently activated by clicking the clickable object button 102 two times.

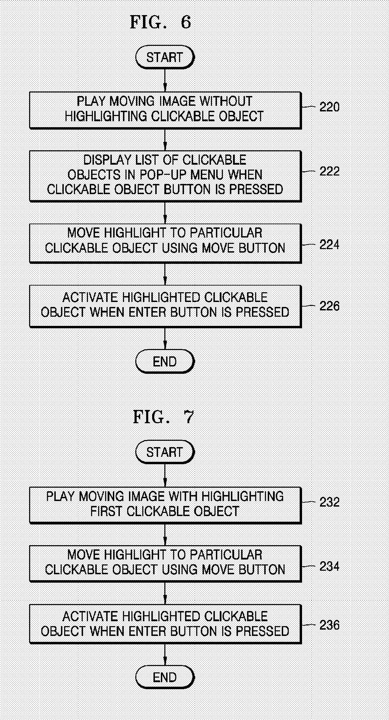

FIG. 6 is a flowchart of a method of activating a clickable object included in a moving image using a menu mode according to an embodiment of the present invention. Referring to FIG. 6, the playback apparatus 1 plays a moving image 100 without highlighting a clickable object 110 even if it finds the clickable object 110 included in the played moving image 100 in operation 220. When the clickable object button 102 is pressed once, the playback apparatus 1 displays a list of clickable objects in a pop-up menu in operation 222. Here, an assumption is made that one or more clickable objects are included in the moving image 100 played on a screen. If a user moves to a particular clickable object using the move button 106 usually provided in the user input unit 2, the playback apparatus 1 move a highlight to the particular clickable object in operation 224. If the user presses the "Enter" or "Select" button 104 usually included in the user input unit 2, the playback apparatus 1 activates the highlighted clickable object in operation 226. Accordingly, one clickable object among a plurality of clickable objects can be conveniently activated using the menu mode. Here, since the clickable object button 102 is pressed once, the move button 106 is used first to move the highlight between clickable objects on the list. However, after the function of the clickable object button 102 is cancelled, the move button 106 may be returned to its original function as a normal move button. The function of the clickable object button 102 may be cancelled, when a user presses the clickable object button 102 a second time.

FIG. 7 is a flowchart of a method of activating a clickable object included in a moving image by sequentially moving a highlight from one clickable object to another and selecting the clickable object using normal buttons according to an embodiment of the present invention. Referring to FIG. 7, in operation 232, the playback apparatus 1 automatically highlights a first clickable object included in a moving image 100, as shown, for example, in FIG. 1, regardless of whether a particular button is pressed when the first clickable object is found while the moving image 100 is played on a screen. Here, an assumption is made that at least one clickable object is included in the moving image 100 on the screen. Thereafter, if a user moves to a particular clickable object using the move button 106 or a "Tab" button, which is usually included in the user input unit 2, the playback apparatus 1 moves the highlight to the particular clickable object in operation 234. If the user presses the "Enter" or "Select" button 104 usually included in the user input unit 2, the playback apparatus 1 activates the highlighted clickable object in operation 236.
Accordingly, one clickable object among a plurality of clickable objects can be conveniently activated by using the method of moving a highlight between one or more clickable objects and selecting a single clickable object using existing normal buttons. Here, since the clickable object button 102 is pressed once, the move button 106 or the "Tab" button is used first to move the highlight between the clickable objects. However, after the function of the clickable object button 102 is cancelled, the move button 106 or the "Tab" button may be returned to its original function as a normal move or "Tab" button.

The above-described four scenarios are simply example, and various changes can be made, and other scenarios can also be included.

The embodiments of the present invention can be written as computer programs. Codes and code segments forming the programs can be easily construed by programmers skilled in the art to which the present invention pertains. Also, the programs can be stored in a computer readable medium, and the present invention can be accomplished by reading and executing the programs. Examples of the computer readable medium may be magnetic recording media, optical recording media, or carrier waves.

According to the present invention, a clickable object can be quick and conveniently activated. In other words, a user can quickly and conveniently activate a clickable object using a special clickable object button provided in a user input unit even when a moving image including the clickable object continuously changes on a screen. In addition, the clickable object can be activated in various and flexible manners using the clickable object button.

While there have been illustrated and described what are considered to be example embodiments of the present invention, it will be understood by those skilled in the art and as technology develops that various changes and modifications, may be made, and equivalents may be substituted for elements thereof without departing from the true scope of the present invention. Many modifications, permutations, additions and subcombinations may be made to adapt the teachings of the present invention to a particular situation without departing from the scope thereof. For example, a playback apparatus may be a single apparatus, or may be incorporated into a recording apparatus (i.e., digital video disc recorder "DVDR"). Similarly, a control unit can be implemented as a chipset having firmware, or alternatively, a general or special purposed computer programmed to perform the methods as described, for example, with reference to FIG. 4, FIG. 5, FIG. 6 and FIG. 7. Accordingly, it is intended, therefore, that the present invention not be limited to the various example embodiments disclosed, but that the present invention includes all embodiments falling within the scope of the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A user interface method comprising:
highlighting a clickable object (110) included in a moving image (100) played on a screen; and
activating the highlighted clickable object (110),
wherein at least one of the operation of highlighting the clickable object (110) and the operation of activating the highlighted clickable object (110) is performed when a particular button (102) specially provided in a user input device (2) is pressed.

2. The user interface method as claimed in claim 1,
wherein the highlighting of the clickable object (110) and the activating of the highlighted clickable object (110) are performed at one time when the particular button (102) is pressed once.

3. The user interface method as claimed in claim 1,
wherein the highlighting of the clickable object (110) is performed when the particular button (102) is pressed first time, and the activating of the highlighted clickable object (110) is performed when the particular button (102) is pressed second time.

4. The user interface method as claimed in claim 1,
wherein the highlighting of the clickable object (110) is performed when the particular button (102) is pressed, and the activating of the highlighted clickable object (110) comprises selecting at least one clickable object (110) in a menu mode and activating the selected clickable object (110).

5. The user interface method as claimed in claim 1,
wherein the highlighting of the clickable object (110) is performed when the particular button (102) is pressed, and the activating of the highlighted clickable object (110) comprises sequentially moving a highlight between clickable objects and activating the highlighted clickable object (110) using normal buttons included in the user input device (2).

6. The user interface method as claimed in claim 2,
wherein the highlighting of the clickable object (110) comprises highlighting the clickable object (110) when the clickable object (110) is found in the moving image (100) played on the screen, regardless of whether the particular button (102) is pressed.

7. The user interface method as claimed in claim 6,
wherein the activating of the highlighted clickable object (110) is performed when the particular button (102) is pressed.

8. The user interface method as claimed in claim 3,
wherein the highlighting of the clickable object (110) is performed only when the particular button (102) is pressed and when the clickable object (110) is found.

9. The user interface method as claimed in claim 8,
wherein the activating of the highlighted clickable object (110) is performed when the particular button (102) is pressed again.

10. The user interface method as claimed in claim 4,
wherein the highlighting of the clickable object (110) comprises displaying a list of clickable objects in a pop-up menu when the at least one clickable object (110) included in the moving image (100) played on the screen is found, regardless of whether the particular button (102) is pressed.

11. The user interface method as claimed in claim 10,
wherein the activating of the highlighted clickable object (110) comprises moving a highlight across the pop-up menu according to an input of a move button (106) usually provided in the user input device (2) to select a clickable object (110) desired by a user from the list of clickable objects, and activating the selected clickable object (110) when a select button (104) usually provided in the user input device (2) is pressed.

12. The user interface method as claimed in claim 11,
wherein, when the particular button (102) is pressed, the move button (106) is first used to move the highlight between the clickable objects on the list, and when a function of the particular button (102) is cancelled, the move button (106) is returned to its original function as a normal move button (106).

13. The user interface method as claimed in claim 5,
wherein the highlighting of the clickable object (110) comprises highlighting a first clickable object (110) when at least one clickable object (110) is found in the moving image (100) on the screen, regardless of whether the particular button (102) is pressed.

14. The user interface method as claimed in claim 13,
wherein the activating of the highlighted clickable object (110) comprises sequentially moving a highlight between clickable objects found in the moving image (100) using a normal button provided in the user input device (2) to select one clickable object (110) and activating the selected clickable object (110) when a select button (104) usually provided in the user input device (2) is pressed.

15. The user interface method as claimed in claim 14,
wherein the normal button provided in the user input device (2) comprises one of a move button (106) and a tab button.

16. The user interface method as claimed in claim 14 or claim 15, wherein, when the particular button (102) is pressed, the normal button is first used to move the highlight between the clickable objects, and when a function of the particular button (102) is cancelled, the normal button is returned to its original function.

17. A playback apparatus for moving images, comprising:
a unit for highlighting (10) a clickable object (110) included in a moving image (100) played on a screen; and
a unit for activating (20) the highlighted clickable object (110), wherein at least one of the unit for highlighting (10) and the unit for activating (20) is adapted to operate when a particular button (102) specially provided in a user input device (2) is pressed.

18. The playback apparatus of claim 17, wherein the unit for highlighting (10) and the unit for activating (20) are adapted to operate together when the particular button (102) is pressed once.

19. The playback apparatus of claim 17, wherein the unit for highlighting (10) is adapted to operate when the particular button (102) is pressed a first time, and the unit for activating (20) is adapted to operate when the particular button (102) is pressed a second time.

20. The playback apparatus of claim 17, wherein the unit for highlighting (10) is adapted to operate when the particular button (102) is pressed, and the unit for activating (20) is operable to select at least one clickable object (110) in a menu mode and to activate the selected clickable object (110).

21. The playback apparatus of claim 17, wherein the unit for highlighting (10) is adapted to operate when the particular button (102) is pressed, and the unit for activating (20) is adapted to sequentially move a highlight between clickable objects and to activate the highlighted clickable object (110) using normal buttons included in the user input device (2).

22. An apparatus for reproducing moving images comprising:
a playback unit (30) arranged to playback a moving image (100) on a screen;
a user interface receiver (10) arranged to receive a user input, via a user input device (2); and
a control unit (20) configured to highlight a clickable object (110) included in the moving image (100) played on the screen, and to activate the highlighted clickable object (110), when a particular button (102) specially provided in the user input device (2) is pressed.

23. The apparatus as claimed in claim 22, wherein the control unit (20) is further configured to highlight the clickable object (110) and to activate the highlighted clickable object (110) at one time when the particular button (102) is pressed once.

24. The apparatus as claimed in claim 22, wherein the control unit (20) is further configured to highlight the clickable object (110) when the particular button (102) is pressed a first time, and to activate the highlighted clickable object (110) when the particular button (102) is pressed a second time.

25. The apparatus as claimed in claim 22, wherein the control unit (20) is further configured to highlight the clickable object (110) when the particular button (102) is pressed, and to select at least one clickable object (110) in a menu mode and then activate the selected clickable object (110).

26. The apparatus as claimed in claim 22, wherein the control unit (20) is further configured to highlight the clickable object (110) when the particular button (102) is pressed, and to sequentially move a highlight between clickable objects and then activate the highlighted clickable object (110) using normal buttons included in the user input device (2).

27. The apparatus as claimed in claim 22, wherein the control unit (20) is further configured to highlight the clickable object (110) when the clickable object (110) is found in the moving image (100) played on the screen, regardless of whether the particular button (102) is pressed.

28. The apparatus as claimed in claim 27, wherein the control unit (20) is further configured to activate the highlighted clickable object (110) when the particular button (102) is pressed.

29. The apparatus as claimed in claim 22, wherein the control unit (20) is further configured to highlight the clickable object (110) only when the particular button (102) is pressed and when the clickable object (110) is found.

30. The apparatus as claimed in claim 22, wherein the control unit (20) is further configured to provide a visual display of a list of clickable objects in a pop-up menu, when the at least one clickable object (110) included in the moving image (100) played on the screen is found, regardless of whether the particular button (102) is pressed.

31. The apparatus as claimed in claim 30, wherein the control unit (20) is further configured to move a highlight across the pop-up menu according to an input of a move button (106) usually provided in the user input device (2) to select a clickable object (110) desired by a user from the list of clickable objects, and to activate the selected clickable object (110) when a select button (104) usually provided in the user input device (2) is pressed.

32. The apparatus as claimed in claim 31, wherein the apparatus is adapted such that when the particular button (102) is pressed, the move button (106) is first used to move the highlight between the clickable objects on the list, and when a function of the particular button (102) is cancelled, the move button (106) is returned to its original function as a normal move button (106).

33. The apparatus as claimed in claim 30, wherein the control unit (20) is further configured to highlight a first clickable object (110) when at least one clickable object (110) is found in the moving image (100) on the screen, regardless of whether the particular button (102) is pressed.

34. The apparatus as claimed in claim 33, wherein the control unit (20) is further configured to sequentially move a highlight between clickable objects found in the moving image (100) using a normal button provided in the user input device (2) to select one clickable object (110), and to activate the selected clickable object (110) when a select button (104) usually provided in the user input device (2) is pressed.

35. The apparatus as claimed in claim 33, wherein the normal button provided in the user input device (2) comprises one of a move button (106) and a tab button.

36. The apparatus as claimed in claim 33, wherein the apparatus is adapted such that when the particular button (102) is pressed, the normal button is first used to move the highlight between the clickable objects, and when a function of the particular button (102) is cancelled, the normal button is returned to its original function.
